# EUROPEAN PATENT APPLICATION

(11) **EP 1 201 935 A1**
(43) Date of publication of application: **02.05.2002**
(21) Application number: 00123272.7
(22) Date of filing: 26.10.2000
(51) Int. Cl.: F16B 5/06, H04N 5/64, E06B 3/54

(54) **Fastening means**

(71) Applicant: SONY-WEGA PRODUKTIONS GmbH, 70327 Stuttgart (DE)
(72) Inventor: Kreuzer, Fritz, c/o Sony Wega Produktions Gmbh, 70327 Stuttgart (DE)
(74) Representative: Müller . Hoffmann & Partner Patentanwälte

(57) **Abstract**

A fastener comprising a male member (7) and a female member (1) for fixing two panels (11; 12) together, wherein the male member (7) and the female member (1) are attached to one of the two panels (11; 12), respectively. A movability of the male member (7) and/or the female member (1) in a radial direction while attached to a respective panel (11; 12) enables a compensation of tolerances between the two panels (11; 12) to be fixed together.

## Description

The present invention relates to a female member according to the preamble of claim 1 of a fastener for fixing two panels together. Further, the present invention relates to a male member according to the preamble of claim 7 of a fastener for fixing two panels together.

Fastening means comprising a male member and a female member are generally known for fixing two panels together, wherein the male member being attached to a first panel is coupled to the female member being attached to a second panel. Said fastening means are commonly used in applications which require an easy and fast coupling of two panels, without that high forces are exerted on these panels in an assembled state. Said fastening means may be used in the fields of automotive or High Fidelity in order to fix e.g. decorating trims or parts having a low weight, respectively.

DE 36 05 311 A1 discloses a push-button fastener and DE 844 381 discloses a clamp connection for two flat elements which respectively show a fixed clip or female element into which a pin or male member can be detachably coupled. The fastening means disclosed in said two documents are effective to prevent a lateral displacement of the elements being assembled together.

US 4,787,320 discloses a fastener comprising a male and a female member wherein the male member is fitted in one of two panels and detachably coupled to the female member fitted in the other panel. The female member comprises locking pawl portions fixedly fitting the female member to a mounting hole provided in the other panel such that a movability of the female member within said mounting hole is prevented.

DE 37 04 696 C2 discloses a fastener comprising a male and a female member wherein the male member is attached to a first panel and the female member is attached to a second panel. The female member comprises an elastical flange for axially fixing the female member to a hole provided within the second panel. The first and second panels can be fixed to each other by introducing a cylindrical body of the male member into said female member.

When the fastening means according to the above prior art are used for fixing two elements together, said elements are fixedly fitted to each other both in an axial direction and in a radial direction with respect to the male member and the female member of said fastening means. However, if considerable tolerances are present between the elements to be fixed together, inner tensions are generated in said elements, which could result in a danger of breakage in case that at least one of the two elements consists of a brittle material such as glass.

Further, when fitting the two elements together, an exact alignment of the male member with the female member is necessary in order to smoothly introduce the first into the latter. In case of said tolerances between said elements to be fixed together, the male member may be offset from the female member such that a smooth coupling is not possible.

It is an object underlying the present invention to provide a fastening means for fixing two parts together, wherein a tolerance between these parts can be easily compensated.

This object is achieved by a female member according to claim 1 and by a male member according to claim 7. Preferred embodiments are defined in dependent claims 2 to 6 and 8 to 11, respectively.

The female member according to the present invention is part of a fastener for fixing a first panel and a second panel together, wherein the fastener comprises a male member and the female member which are coupable to each other. The male member is provided together with the second panel and the female member is attachable to the first panel within a first opening provided therein and comprises a hollow receiving part extending in an axial direction which has a portion of a decreased inner diameter. Further, the female member is radially movable within the first opening provided in the first panel.

The male member according to the present invention is part of a fastener for fixing a first panel and a second panel together, wherein the fastener comprises the male member and a female member which are coupable to each other. The female member is provided together with the first panel and the male member is attachable to the second panel within a second opening provided therein and comprises a locking shaft portion extending in an axial direction. Further, the male member is radially movable within the second opening provided within the second panel.

Both the female member and the male member according to the present invention are mainly used in the field of High Fidelity (HiFi), i.e. in particular for fixing of a glass plate at a front of a TV set. If said glass plate is not precise in shape because of tolerances, said tolerances are compensated by means of said radial movability of the female member and the male member according to the present invention, respectively, so as to prevent inner tensions in the glass plate which otherwise might lead to a danger of breakage. Further, the radial movability of the female member and the male member according to the present invention. respectively, enables an easy assembly or disassembly of the glass plate for a customer because a possible offset of the male member with respect to the female member caused by said tolerances is compensated.

Nevertheless, it is to be understood that the female member and the male member according to the present invention, respectively, may be used for any other element different from said glass plate and also in any other field different from HiFi, e.g. in the field of automotive, wherein materials such as wood, metal or plastic need to be fixed.

Preferably, the female member according to the present invention comprises a head portion having a diameter smaller than a diameter of the first opening provided in the first panel. For example, if the female member is inserted in an opening of a cabinet of a TV set, a dimension of said head portion is chosen such that the female member can be radially moved in each direction for a remarkable distance, e.g. a distance of about 0.5 mm or more. Further, a front surface of the head portion may be flush with a surface of said cabinet in order to prevent a gap when the second panel, e.g. a glass plate, is fixed to the cabinet.

Further preferably, the female member according to the present invention comprises at least one snap fit arranged along a circumferential portion of said head portion and extending axially from the head portion. Further, a radial outer surface of a foot portion of said snap fit is flush with a circumference border of said head portion. This ensures a smooth introducing of the female member into the first opening provided in the first panel and ensures an unhindered radial movability of the female member attached within the first opening.

Further preferably, a tip end of at least one said snap fit radially protrudes outwardly with respect to the circumference border of the head portion. In addition, the female member may be made of a material such that said tip end shows an elasticity in a radial direction. For example, the female member may be made of a thermoplastic resin such as acryl-butadien-styrol or polycarbonat.

If the female member is provided within the first opening of the first panel which may be a cabinet of a TV set, the radial outer surface of said at least one snap fit is in contact with an inner surface of said first opening. For example, the female member may comprise three snap fits which are arranged around its circumference. Due to the elasticity of each snap fit in a radial direction, the female member is positioned in a center of the first opening. In this state, a constant gap is provided between the circumference border of the head portion and the inner surface of the first opening such that the circumference border is not in contact with said inner surface. As for result, the female member is radially movable in each direction to a maximum extent until the circumference border of the head portion comes into contact with the inner surface of the first opening.

Further preferably, the male member according to the present invention may be made of a material having a high stiffness. In this case, nearly no deformation of the locking shaft portion occurs due to said high stiffness, which is necessary to ensure a reliable coupling of the male member to the female member. In particular, the male member may be made of aluminum or a plastic material having a high Young's modulus.

The object of the present invention is further achieved by a fastener for fixing two panels together, which comprises a female member as claimed in claim 1 and a male member as claimed in claim 7. Each of the female member and the male member may be movable in a radial direction e.g. of about 0.5 mm or more while being attached to a respective panel. Due to this addition with respect to the movability in a radial direction, natural tolerances between the panels to be fixed together can be compensated even more effectively. Further preferably, said fastener is used for mounting a glass plate on a cabinet of a TV set.

The accompanying drawings which are incorporated in and constitute a part of the specification, illustrate an exemplary embodiment of the invention and, together with a general description of the invention given above, and the detailed description of the embodiment given below, serve to explain the principles of the invention, wherein:
- **Fig.1**: illustrates a female member according to the present invention in a perspective view;
- **Fig.2**: illustrates the female member shown in Fig. 1 in another perspective view;
- **Fig.3**: illustrates a perspective view of a male member which is designed to be used together with the female member shown in Fig. 1 and 2;
- **Fig. 4**: illustrates an enlargement of a tip end portion of the male member shown in Fig. 3;
- **Fig. 5**: illustrates the male member shown in Fig. 3 in another perspective view; and
- **Fig. 6**: shows a cross-sectional view of the female member and the male member in a state fixed together for fitting a first panel to a second panel.

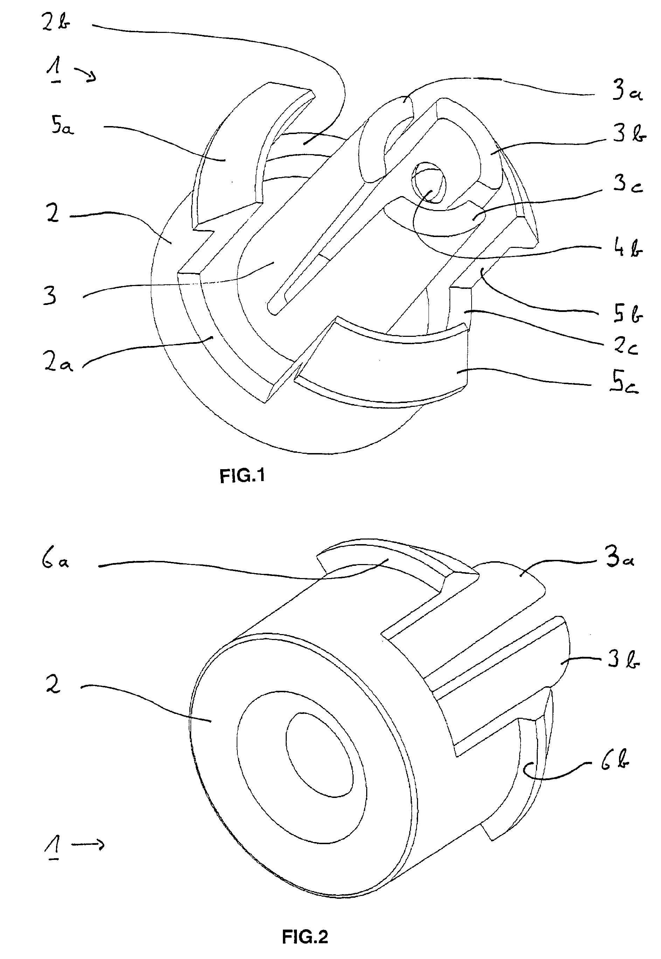

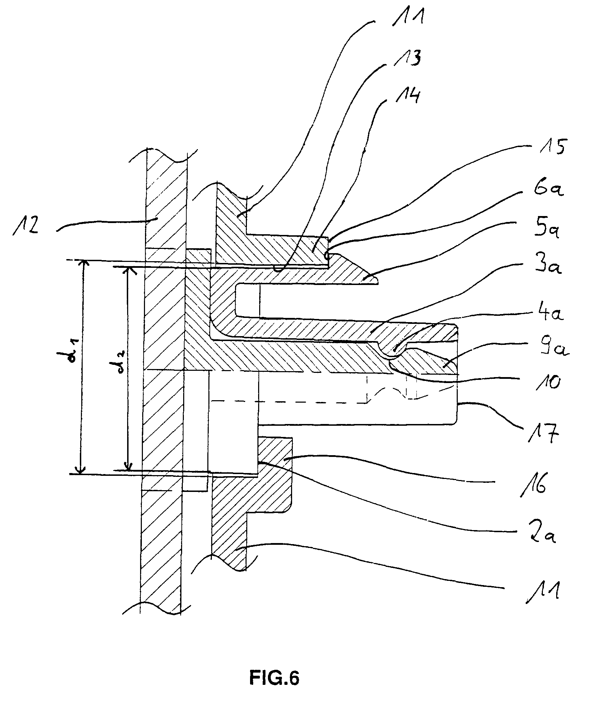

In the following, Figs. 1 to 5 are described which illustrate perspective views of a female member and a male member of a fastener according to the present invention in an exemplary embodiment. In this embodiment, only the female member is radially movable when attached to a first panel 11 (Fig.6), wherein the male member is fixedly attached to a second panel 12 (Fig.6). Of course, the male member may be modified such that it also can be radially movable while being attached to the first panel.

Figs. 1 and 2 show a perspective view of a preferred embodiment of a female member 1 according to the present invention. The female member 1 generally has a circular structure. wherein it comprises a head portion 2 at one end thereof. Said female member 1 is designed to be attached within a first opening 13 (Fig.6) provided in the first panel 11. For example, the first panel 11 may be a cabinet of a TV set. In order to ensure a movability of the female member 1 inside the first opening 13, an outer diameter of the head portion 2 is smaller than an inner diameter of the first opening.

The female member 1 comprises a hollow receiving part 3 which extends in an axial direction with respect to the female member 1. Said hollow receiving part 3 is composed of first, second and third ring-shaped members 3a, 3b and 3c which extend axially from said head portion 2 like cantilever elements. As for result, an end portion of said first to third ring-shaped members 3a-3c, respectively, shows an elasticity in a radial direction such that an inner diameter of the hollow receiving part 3 can be slightly changed upon a radial movement of said first to third ring-shaped member 3a-3c.

Further, each of the first to third ring-shaped members 3a-3c comprises a first, second and third ball-shaped elevation 4a, 4b, and 4c, respectively, which is provided on an inner surface thereof. Said first to third ball-shaped elevations 4a-4c are arranged facing to each other so as to define a portion of said hollow receiving part 3 of a decreased inner diameter.

The female member 1 according to this embodiment further comprises a first, second and third snap fit 5a, 5b and 5c which are arranged along a circumferential portion of said head portion 2. A foot portion of each first-third snap fit 5a-5c is flush with a circumference border of the head portion 2. Said first to third snap fits 5a-5c extend axially from said head portion 2 like cantilever elements such that a tip end thereof has a movability in a radial direction. Accordingly, the female member 1 may be preferably made of a material having elastic properties, such as a thermoplastic resin like acryl-butadien-styrol or polycarbonat.

Further, each tip end of the first to third snap fit 5a-5c comprises a first to third hook portion 6a-6c, respectively, as shown in Fig. 2. In order to position the female member 1 in a center of the first opening 13, the tip end of each first to third snap fit 5a-5c radially protrudes outwardly with respect to a circumference border of the head portion 2. If a radial outer surface of each snap fit 5a, 5b, 5c adjacent to each tip end is in contact with an inner surface of the first opening 13, the female member 1 is well-centered inside the first opening 13 such that the circumference border of the head portion 2 is not in contact with the inner surface of the first opening 13. This ensures a movability of the female member 1 radially in each direction to a maximum extent. Further, the inner surface of the first opening 13 is structured such that the first to third hook portion 6a-6c of each snap fit 5a, 5b and 5c can come into engagement therewith so as to provide an axially defined position of the female member 1 within the first opening 13.

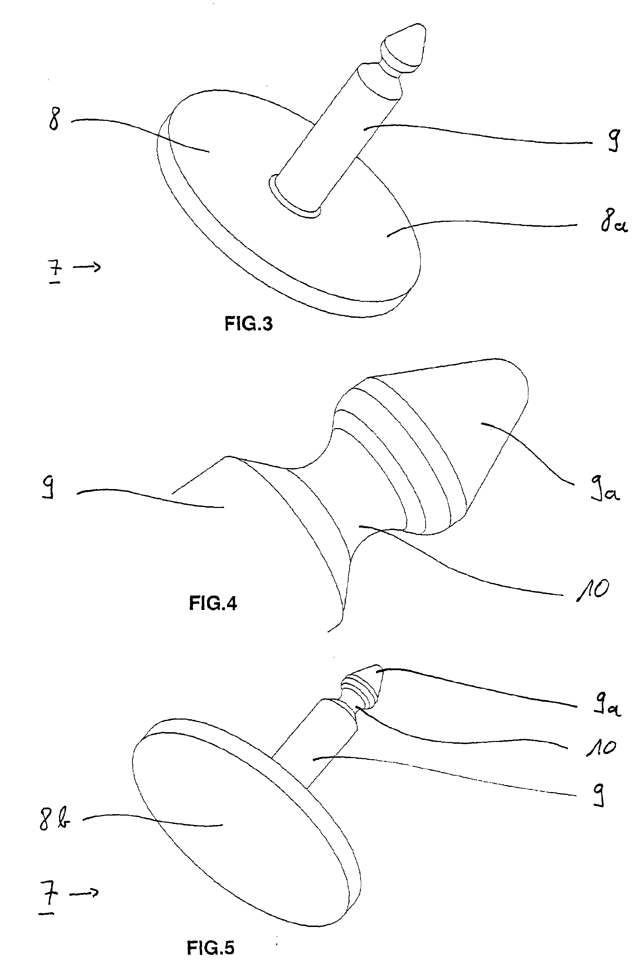

Fig. 3 shows a perspective view of a male member 7 which is designed for use together with the female member 1 according to the present invention. Said male member 7 comprises a disc-shaped base portion 8 and a locking shaft portion 9 which is integrally attached to a front surface 8a of said base portion 8 and extends in an axial direction from said base portion 8. Said locking shaft portion 9 can be introduced into said hollow receiving part 3 of the female member 1 so as to couple said male member 7 to said female member 1.

Fig. 4 shows an enlargement of said locking shaft portion 9 which comprises a circular groove 10 being provided near to a tip end portion 9a thereof. Said circular groove 10 is designed such as to come into engagement with the first to third ball-shaped elevations 4a-4c of the first to third ring-shaped members 3a-3c, respectively, when said male member 7 is fixed to said female member 1. The male member 7 may be made of a material having a high stiffness such that a reliable coupling of the male member 7 to the female member 1 is given when the locking shaft portion 9 is introduced into said hollow receiving part 3. The tip end portion 9a is cone shaped so as to provide a smooth introducing of said locking shaft portion 9 into said hollow receiving part 3.

Fig. 5 illustrates the male member 7 shown in Fig. 3 in another perspective view. The base portion 8 comprises a gluing area on a rear surface 8b which is opposite to the front surface 8a. The male member 7 can be attached to the second panel 12 e.g. by gluing the gluing area of the rear surface 8b to the second panel 12. In an alternative embodiment, it is also possible to form said locking shaft portion 9 directly as an integral part of the second panel 12, which is very easy to manufacture e.g. by injection molding. As for consequence, a step of attaching said male member 7 to said second panel 12 can be omitted leading to an effect of cost minimizing.

In the following, a fixing of the first panel 11 to said second panel 12 by using the female member 1 and the male member 7 as explained above is described. Said female member 1 is attached within the first opening 13 of the first panel 11, wherein it is radially movable therein. An opening of the hollow receiving part 3 is facing to an outside being flush with the surface of the first panel 11, wherein the first to third ring-shaped members 3a-3c extend axially inside the first opening 13 and the first to third hook portions 6a-6c of each first to third snap fit 5a-5c are snapped within the surface of the first opening 13.

The second panel 12 to which the male member 7 is attached via its gluing area is brought into the vicinity of the first panel 11. Subsequently, the locking shaft portion 9 is introduced into the hollow receiving part 3. As soon as the tip end 9a of the locking shaft portion 9 reaches the position of the first to third ball-shaped elevations 4a-4c provided on the inner surface of the hollow receiving part 3 of the female member 1, the locking shaft portion 9 can be further pushed into the hollow receiving part 3 due to the elasticity of the first to third ring-shaped members 3a-3c in a radial direction. In this way, the groove 10 can snap over the first to third ball-shaped elevations 4a-4c, wherein it comes into engagement therewith. In other words, the locking shaft portion 9 is detachably "clipped" into the hollow receiving part 3 so as to fix the first panel 11 and the second panel 12 together, wherein the front surface 8a of the base portion 8 is in flush contact with the opening surface of the first opening 13 provided in the first panel 11.

Fig. 6 illustrates a cross sectional view of a state in which the first panel 11 is fitted to the second panel 12, and wherein the male member 7 is fixed to the female member 1. In detail, the first panel 11 comprises the first opening 13 of which a first diameter d₁ is larger than a second diameter d₂ of the head portion 2 of the female member 1. Further, said first opening 13 comprises various portions 14 extending along said axial direction of said female member 1, wherein a length of said portions 14 is chosen to be in accordance with a length of the first to third snap fits 5a-5c, respectively. In this embodiment, for example, said first opening 13 comprises a number of portions 14 which is equal to the number of said ring-shaped members 3a-3c, namely three.

The female member 1 is inserted in said opening 13 such that an opening surface of the head portion 2 is substantially flush with the surface of the first panel 11. Further, when said female member 1 is fully inserted in said opening 13, a hook portion of one of the first to third snap fits 5a-5c, e.g. the first hook portion 6a of the first snap fit 5a as shown in the cross-sectional view of Fig. 6, comes into engagement with a rear edge 15 of said portion 14, wherein first to third circumference portions 2a-2c of said head portion 2, which are provided in between said first to third snap fits 3a-3c, abut against a limiting portion 16 provided within the first opening 13. In this way, said female member 1 is axially fixed within the first opening 13.

With respect to the male member 7, the rear surface 8b of the base portion 8 is glued to the second panel 12. Further, the locking shaft portion 9 is introduced into the hollow receiving part 3 such that the front surface 8a of the base portion 8 abuts against the opening surface of said head portion 2. In this state, as shown in Fig, 6, the locking shaft portion 9 extends into said hollow receiving part 3 such that the groove 10 is brought into engagement with said first to third ball-shaped elevations 4a-4c, e.g. the first ball-shaped elevation 4a protrudes into said groove 10 as shown in Fig. 6. In this embodiment, for example, a length of said locking shaft portion 9 is chosen such that its tip end portion 9a is flush with a rear opening 17 of the hollow receiving part 3.

In this state as explained with reference to Fig. 6, the first panel 11 is fitted to the second panel 12. Nevertheless, the first diameter d₁ of the first opening 13 being larger than the second diameter d₂ of the head portion 2 provides a movability of the female member 1 in a radial direction being inserted within the first opening 13. As for consequence, the first panel 11 may still be slightly movable in a radial direction such that tolerances which may be present between the first panel 11 and the second panel 12 can be compensated. For example, the movability of the female member 1 in a radial direction inside the first opening 13 provided in the first panel 11 may be in the range of about 0.5 mm, or even more. In case that said female member 1 according to the present invention is used for fixing a glass plate as a second panel 12 to a cabinet of a TV-set as a first panel, inner tensions in the glass plate can be advantageously prevented, and further an assembly of the different parts to be fitted together is facilitated despite said possible tolerances.

It is to be understood that the structure of the female member 1 and the male member 7 is not limited to the embodiment described above with reference to the Figs. 1 and 2. Of course, any modification can be made for this embodiment to achieve the same advantageous effects described above, without departing from the scope of the invention.

By way of example, it may also be possible to form the hollow receiving part as an integral part inside the first panel, wherein the male member may be attached to the second panel while still being movable in a radial direction, e.g. in a range of about 0.5 mm. Still further, in another possible embodiment according to the present invention, it might be possible to provide a female member and a male member constituting a fastener, which may both be movable in a radial direction while being attached to a respective panel. In this way, it may be possible to provide an enlarged range of movability for the fastener, e.g. of about 1 mm or more.

## Claims

1. Female member (1) of a fastener for fixing a first panel (11) and a second panel (12) together, wherein
the fastener comprises a male member and the female member (1) which are coupable to each other, and
the male member is provided together with the second panel, and
the female member (1) is attachable to the first panel (11) within a first opening (13) provided therein and comprises a hollow receiving part (3) extending in an axial direction which has a portion of a decreased inner diameter,
**characterized in that**
the female member (1) is radially movable within the first opening (13) provided in the first panel (11).

2. Female member (1) according to claim 1, **characterized by**
a head portion (2) having a second diameter (d₂) smaller than a first diameter (d1) of the first opening (13) provided in the first panel (11).

3. Female member (1) according to claim 2, **characterized by**
at least one snap fit (5a, 5b, 5c) arranged along a circumferential portion of said head portion (2) and extending axially from the head portion (2), wherein a radial outer surface of a foot portion of said snap fit (5a, 5b, 5c) is flush with a circumference border of said head portion (2).

4. Female member (1) according to claim 3, **characterized by**
a tip end of said snap fit (5a, 5b, 5c) radially protruding outwardly with respect to the circumference border of the head portion (2).

5. Female member (1) according to anyone of the preceding claims, **characterized in that**
the female member (1) is made of a material such that said tip end of said snap fit (5a. 5b, 5c) shows an elasticity in a radial direction.

6. Female member (1) according to claim 5, **characterized in that**
the female member (1) is made of acryl-butadien-styrol or polycarbonat.

7. Male member (7) of a fastener for fixing a first panel (11) and a second panel (12) together, wherein
the fastener comprises the male member (7) and a female member which are coupable to each other, and
the female member is provided together with the first panel (11), and
the male member (7) is attachable to the second panel (12) within a second opening provided therein and comprises a locking shaft portion (9) extending in an axial direction, **characterized in that**
the male member (7) is radially movable within the second opening provided in the second panel (12).

8. Male member (7) according to claim 7, **characterized in that**
the male member (7) is made of a material such that the locking shaft portion (9) shows a high stiffness.

9. Male member (7) according to claim 8, **characterized in that**
the male member is made of aluminum or a plastic material having a high Youngs' modulus.

10. Fastener for fixing two panels together, comprising
a female member (1) as claimed in claim 1 and a male member (7) as claimed in claim 7.

11. Fastener according to claim 10, **characterized in that**
said fastener is used for mounting a glass plate on a cabinet of a TV-set.
